# EUROPEAN PATENT APPLICATION

(11) **EP 4 046 724 A1**
(43) Date of publication of application: **24.08.2022**
(21) Application number: 21157840.6
(22) Date of filing: 18.02.2021
(51) Int. Cl.: B09B 3/00, B01J 8/24, F26B 17/10, F26B 3/08, F26B 3/092, B01J 8/40

(54) **METHOD AND SYSTEM FOR DRYING FOODSTUFF RESIDUAL PRODUCT**

(71) Applicant: Elajo Technology Solutions AB, 57229 Oskarshamn (SE)
(72) Inventor: Ekstrand, Stefan, 352 42 Växjö (SE); Råhlin, Robert, 35264 Växjö (SE)
(74) Representative: AWA Sweden AB

(57) **Abstract**

The present invention relates to a system (1) and method (100) for drying a residual product (12) from a foodstuff production process, the residual product containing between 20-50% dry substance. The method comprises the steps of producing a main foodstuff product (4) in the foodstuff production process (2); receiving the residual product continuously from the foodstuff production process; supplying the residual product to a mixer (30); supplying the mixed product (31) to a fluidized bed (40); supplying heated air (57) of between 60-150 degrees C to the fluidized bed; drying the mixed product in the fluidized bed using the supplied heated air; cooling the dried product; and extracting the dried product (42) from the fluidized bed, wherein a portion (62) of the dried product is supplied to the mixer to be mixed with received residual product (12).

## Description

### Technical Field

The present disclosure relates to a method and system for drying a foodstuff production process residual product.

### Background

From production process of foodstuff, a residual product is received, typically in the form of a slab. The residual product may contain up to 80% water, and therefore in many situations has a low value. It may be treated as waste, or in some cases be used for production of biogas or animal feed if mixed with a preservative.

If the water level in the residual product could be lowered the value of the product may be increased and it may be used for wider range of purposes, for instance in the food industry. However, there are no solutions available to provide a drying procedure that is effective both in terms of managing and drying the product, as well as being energy efficient. An energy inefficient method would be too costly and not motivate an investment in treating the residual product, leading to a maintained low value residual product.

Consequently, there is a need for an efficient method for treating a residual product from a foodstuff production process.

### Summary

It is an object of the present invention to provide an improved solution that alleviates the mentioned drawbacks with present devices. Furthermore, it is an object to provide a method and system that effectively dries residual product from a foodstuff production process.

The invention is defined by the appended independent claims, with embodiments being set forth in the appended dependent claims, in the following description and in the drawings.

According to a first aspect of the invention, a method of drying a residual product from a foodstuff production process is provided, the residual product containing between 20-50% dry substance. The method comprises the steps of producing a main foodstuff product in the foodstuff production process, further resulting in the residual product; receiving the residual product continuously from the foodstuff production process; supplying the residual product to a mixer; supplying the mixed product to a fluidized bed; supplying heated air of between 60-150 degrees C to the fluidized bed; drying the mixed product in the fluidized bed using the supplied heated air; cooling the dried product; and extracting the dried product from the fluidized bed, wherein a portion of the dried product is supplied to the mixer to be mixed with received residual product.

The foodstuff production may be a production of liquid products such as drinks, semi-liquid products with yoghurt like, creme like or creme fraiche like consistency, or solid products such as cheese or tofu, or solid products with cheese like or tofu like consistency. The foodstuff production may in one embodiment be production of non-diary foodstuff products, and the method may relate to a method for drying non-diary residual product. The foodstuff production may in one embodiment be production of vegetable foodstuff. In one embodiment, the foodstuff production may be production of oat, almond, soy or broad bean products. In one embodiment, the foodstuff production process may be a beverage production process. In a further embodiment, the beverage production may be oat drink, almond drink, broad bean drink or soy drink production.

The method may be applied in direct connection with the foodstuff production, such that the residual product is received directly and continuously from the foodstuff production process. The drying method may thereby be integrated with the foodstuff production process. By receiving the residual product continuously from the foodstuff production process, it may be meant that the residual product is not removed from the production site or removed from the from product flow, but directly supplied from the foodstuff production process to the drying process. In some embodiments, it may be meant that the residual product is automatically supplied to the drying process without human interaction between the foodstuff production process and the drying process, either directly into the mixer or via a buffer storage. The residual product may be temporarily stored in a buffer storage from which the residual product may be supplied to the mixer in a desired pace. The residual product may comprise between 20-80%, 20-50%, or 30-50% dry substance, the remaining substance being water. The level of dry substance may represent the percentage of solids in the mixture of substances of the residual product. The higher percentage the drier product.

In the mixer, the residual product received from the foodstuff production process may be mixed with dried product extracted from the fluidized bed. The output of the mixer may be referred to as mixed product, comprising a mix of residual product and dried product. From the mixer, the mixed product is supplied to a fluidized bed. In the fluidized bed, the mixed product is dried using heated air at a temperature of between 60-150 degrees C supplied to the fluidized bed. After the mixed product has been dried in the fluidized bed using the supplied heated air, the dried product is cooled. The dried product may be cooled using cooling air supplied to the fluidized bed. The mixer may have an additional function of decomposing or dissolve the wet residual product which may comprise large lumps.

The mixing of residual product and dried product may enable a dry substance level of the product supplied to the fluidized bed that provides an efficient drying process.

The heated air may be supplied to the fluidized bed via an air distributor being part of the fluidized bed. The air distributor may provide a desired distribution of the heated air towards the product present in the fluidized bed.

By drying the residual product from the foodstuff production, the residual product may be used in a larger number of ways and thereby have an increased value. The dried residual product may for instance be used for other human food products, or for animal feed. By integrating the drying method with the foodstuff production process, such that the residual product is continuously received from the foodstuff production process, a method may be provided that fulfills food and hygiene regulations. The method according to the present invention further provides a method of drying foodstuff production residual product that is robust and energy efficient.

In one embodiment, the mixer may be supplied with between 70-80% residual product and 20-30% of dried product, wherein the dried product may have at least 80% dry substance. In one preferred embodiment, the mixer may be supplied with about 75% residual product and about 25% dried product, the dried product having at least 85% dry substance.

In one embodiment, the mixer may be supplied with residual product and dried product in a ratio such that the mixed product, after mixing, contains about 45-50% dry substance. In one embodiment, the dry substance level of the mixed product in the mixer may be measured, and the ratio between the supplied residual product and dried product may be controlled based on said measurement. The dry substance level of the mixed product may for instance be measured by measuring the current consumption of the motor driving the mixing means in the mixer. In increased current consumption of the motor may indicate a lower dry substance level, compared to a decreased current consumption which may indicate a higher dry substance level. A predetermined threshold current consumption level may be set, indicating a predetermined dry substance level. If the measured current consumption level exceeds the threshold level, the share of dried product supplied to the mixer may be increased. Similarly, the same or an additional threshold current consumption level may be set which may indicate a too high dry substance level in the mixed product, providing that the share of residual product supplied to the mixer may be increased. There may be other alternatives in measuring the dry substance level of the mixed product, such as measuring the weight and/or density of the mixed product in or outside the mixer. In an alternative embodiment, the dry substance level of the dried product supplied to the mixer and the dry substance level of the residual product supplied to the mixer may be measured, and the supply of dried product and/or residual product to the mixer may be controlled based on the measured dry substance levels. The resulting dry substance level of the mixed product may thereby be controlled. The dry substance level of the dried product supplied to the mixer may for instance be measured by measuring a current consumption level of a motor driving a conveyor supplying the dried product to the mixer. Alternatively, the weight and/or density of the dried product may be measured prior to being supplied to the mixer. The dry substance level of the residual product supplied to the mixer may for instance be measured by measuring a current consumption level of a motor driving a conveyor supplying the residual product to the mixer. Alternatively, the weight and/or density of the residual product may be measured prior to being supplied to the mixer, in or outside the conveyor. The conveyor for the dried product and/or the residual product may be provided with weighing means to measure the weight and/or density of the respective product.

In one embodiment, the step of drying the product in the fluidized bed comprises a step of shaking or vibrating the mixed product to be dried in the fluidized bed while supplying the heated air. In a preferred embodiment, the product in the fluidized bed may be shaken. By shaking or vibrating the mixed product, the drying efficiency using the supplied heated air may be improved.

In a further embodiment, the dried product may be further shaken or vibrated in the fluidized bed during cooling.

In one embodiment, the fluidized bed may comprise a first section in which the heated air may be distributed to heat the mixed product to be dried in the fluidized bed, and a second section in which cooling air may be supplied to cool the dried product. The dried product may be moved from the first section to the second section after drying. When cooled, the dried product may be extracted from the second section of the fluidized bed. An air distributor that may be arranged to distribute the heated air supplied to the fluidized bed may further comprise corresponding first and second sections. The first section of the air distributor may be configured to supply heated air to the first section of the fluidized bed. The second section of the air distributor may be configured to supply cooling air to the second section of the fluidized bed, for cooling the dried product.

In one embodiment, the step of supplying heated air to the fluidized bed comprises the steps of receiving air and heating the received air with waste heat from the foodstuff production process before supplying the heated air to the fluidized bed. The drying process may be integrated with and performed in direct connection with the foodstuff production. In order to provide an energy efficient overall process, the waste heat from the foodstuff production process may be used to heat air to be supplied to the fluidized bed. The waste heat may be used in a pre-heater to at least partly heat the air to the desired temperature, and if needed an additional heat source, such as an electrical heater, may be used to heat the air to the final temperature before supplying the air to the fluidized bed. The waste heat from the foodstuff production process may be approximately 30-90 degrees C, which is used to heat the received air to a temperature of 40-80 degrees C. The additional heat source may then be used to heat the pre-heated air to a desired temperature of 80-150 degrees C. The waste heat received from the foodstuff production may be intermediately stored in an accumulator, such as a water tank. In some embodiments the additional heat source may not be needed. The received air may be ambient air of regular room temperature. In one embodiment, the received air may be air output from the fluidized bed and/or the cyclone. Such output air may have a temperature of about 50 degrees C.

In one embodiment, the step of extracting the dried product from the fluidized bed comprises a step of suppling the dried product to a finisher device in which the dried product may be comminuted. In order to split up any lumps in the dried product, lumps which may comprise a small amount of moisture, the dried product may be comminuted in the finisher device. Any moisture in the lumps may thereby be absorbed in the total mass of the dried product in the finisher device. The dried product supplied to the mixer may be from the finisher device. In one embodiment, 40-60% of the dried product in the finisher device may be supplied to the mixer, and the remaining portion may be supplied to a storage means.

In one embodiment, the method may further comprise a step of extracting air used for drying the product from the fluidized bed, and supplying the extracted air to a cyclone device to separate fine particles of dried product from the extracted air. The extracted air from the fluidized bed may comprise up to 10-15% of fine particles of dried product, particles that are small and light enough to follow the air when extracted. In order to improve the efficiency of treating and collecting the residual product, these fine particles may be separated and combined with the other dried product from the fluidized bed. The separated product from the cyclone device may be provided to a finisher device, or to a storage means, together with the other dried product. It may be an advantage to supply the separated particles to the finisher device since the separated particles may be very dry and may thereby effectively absorb any moisture left in lumps treated in the finisher device.

In one embodiment, the method may further comprise a step of cleaning the mixer and the fluidized bed by means of at least one respective cleaning nozzle. The mixer and the fluidized bed may comprise at least one respective cleaning nozzle, configured to supply a cleaning fluid to, in a cleaning process, clean the respective device. The drying procedure may be paused in order to supply the cleaning fluid to clean the respective devices.

According to a second aspect of the invention, a foodstuff production residual product drying system is provided. The system comprises a mixer, a fluidized bed and means for supplying heated air to the fluidized bed, wherein the system is configured to perform the method according to any of the embodiments above. In different embodiments, the system may further comprise a finisher device, a cyclone device, storage means and/or additional heat source.

### Brief Description of the Drawings

The invention will in the following be described in more detail with reference to the enclosed drawings, wherein:
Fig. 1 shows an overview block diagram of a system according to an embodiment of the invention; and
Fig. 2 shows a flow chart of a method according to an embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

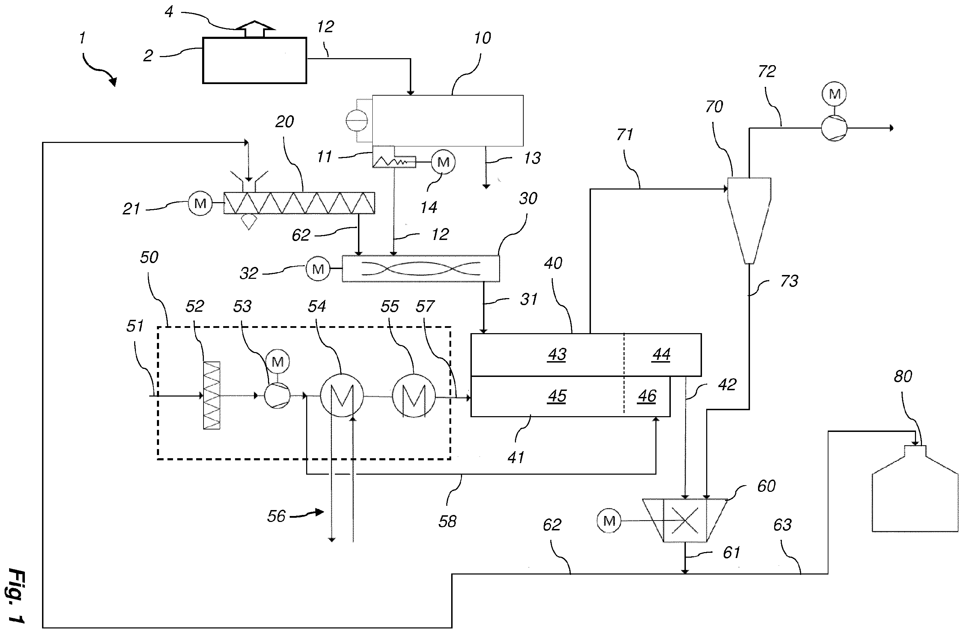

Fig. 1 illustrates a foodstuff production residual product drying system 1 according to an embodiment of the invention. In the system 1, a foodstuff production process 2 produces a main foodstuff product 4, and which foodstuff production process 2 further results in a residual product 12. The residual product 12 is continuously received from the production process. The residual product 12 may be supplied from the foodstuff production process 2 by means of a feeder or conveyor. The residual product 12 comprises between 20-50% dry substance in order to achieve an effective drying process. The residual product 12 may first be received in an intermediate storage 10, such as a silo. The intermediate storage 10 comprises an overfill control 13. It further comprises a dosing feeder 11 for controlling the feed level of residual product 12 to a mixer 30. The dosing feeder 11 is driven by an electrical motor 14.

In the mixer 30 the residual product 12 is mixed with already dried product 62 in order to have a mixed product 31 with a suitable dry substance level for an efficient drying process. The dried product 62 supplied to the mixer 30 may be supplied via a supplying conveyor 20 to control the feed level of dried product 62 to the mixer 30. The supplying conveyor 20 may be driven by an electrical motor 21. The mixer 30 may be shovel based to provide a suitable mixing effect. The shovels of the mixer 30 is driven by an electrical motor 32.

The mixed product 31 should preferably contain about 45-50% dry substance. In one embodiment, a ratio of 1:3 between dried product 62 and residual product 12 may be supplied to the mixer 30. Differently worded, the mixer 30 may be supplied to contain 20-30% dried product 62 and 70-80% residual product 12. The desired mix of residual product 12 and dried product 62 can be controlled by controlling the amount of respective product supplied per time unit to achieve the desired ratio. In an alternative, the dry substance level of the residual product 12 and the dried product 62 is measured and the supply of the dried product 62 and/or the residual product 12 is controlled based on the measured dry substance levels. Such measurement may be made by measuring the current consumptions of the electrical motors 14, 21 respectively. Alternatively, the dosing feeder 11 and/or the supplying conveyor 20 may be provided with means for measuring weight and/or density of the supplied products. In yet another alternative, the dry substance level of the mixed product 31 is measured, and the ratio between the supplied residual product 12 and the dried product 62 is controlled based on said measurement. Such measurement may be made by measuring the current consumption of the electrical motor 32 driving the mixer 30. Alternatively, the weight and/or density of the mixed product 31 is measured, inside or downstream the mixer 30.

The mixed product 31 is supplied to a fluidized bed 40 in which the mixed product 31 is dried. The drying of the mixed product 31 is performed using a supply of heated air 57 from a means 50 for heated air supply. The mixed product 31 is preferably provided on a shaking bed in the fluidized bed 40 when the heated air is distributed towards the mixed product 31. The drying of the mixed product 31 is performed in a first section 43 of the fluidized bed 40. In the first section 43 the heated air 57 is distributed towards the mixed product 31 at the same time as the bed is shaken in order to dry the product. The heated air 57 is supplied towards the mixed product 31 via a first section 45 of an air distributor 41.

When the product is dried it is cooled in a second section 44 of the fluidized bed 40. In the second section 44 cooling air 58 is supplied via a second section 46 of the air distributor 41. The first section 43 of the fluidized bed 40 may not be separated from the second section 44 but different parts of the same area or chamber. The first section 45 of the air distributor 41 may be separated from the second section 46 of the air distributor 41 such that air supplied to either of the two sections does not reach the other section within the air distributor 41. The two sections 43, 44 of the fluidized bed 40 may have a common air extraction outlet through which air 71 is extracted from the fluidized bed 40.

The heated air 57 is supplied using the means 50 for heated air supply. The means 50 for heated air supply comprises a fan 53 for providing incoming air 51, preferably via an air filter 52, to a first heater 54. The incoming air 51 may be ambient air of room temperature. The first heater 54 is a heat exchanger using waste heat 56 from the foodstuff production to preheat the incoming air 51. The waste heat 56 may typically have a temperature of about 80 degrees C. The incoming air 51 may thereby be pre-heated to about 70-80 degrees C.

The pre-heated air is further heated in a second heated 55. The second heater 55 may be an electrical heater used to heat the pre-heated air to the desired temperature. The desired temperature of the heated air 57 is typically between 80-150 degrees C, preferably between 100-120 degrees C.

The cooling air 58 supplied to the second section 44 of the fluidized bed 40 via the air distributor 41 is supplied by the fan 53, being air upstream of the first and second heaters 54, 55.

The dried and cooled product 42 is extracted from the fluidized bed 40. The extracted dried product 42 is supplied to a finisher 60. In the finisher 60 the dried product 42 is comminuted to smash any lumps of dried product into smaller pieces. The lumps may comprise moisture not vaporized in the fluidized bed 40. The moisture in such lumps may thereby be absorbed by the total mass of the dried product 42. The dried end product 61 is then extracted from the finisher 60. The dried end product 61 is split up in two portions 62, 63. One portion being the dried product 62 supplied to the mixer 30. The second portion 63 may be supplied to a storage means 80. In one embodiment, the two portions 62, 63 of the dried end product 61 may be about the same size, or the portion 62 supplied to the mixer 30 may be about 45-50% of the dried end product 61.

The air supplied to the fluidized bed 40 is after drying the product be extracted from the fluidized bed 40. The extracted air 71 may be supplied to a cyclone device 70. In the cyclone device 70 particles of dried product being small and light enough to follow the extracted air 71 is separated from the extracted air 71. The air 72 may leave the cyclone device 70. The separated particles 73 is supplied to the finisher 60 to be combined with the extracted dried product 42 from the fluidized bed 40. Alternatively, the separated particles 73 may be supplied directly to the storage means 80.

In embodiment of the illustrated system 1, a level of 200-450kg/h of residual product 12 is received from the foodstuff production, said residual product 12 containing between 20-50% dry substance. From the intermediate storage means, about 300kg/h residual product 12 is supplied to the mixer, together with about 100-250kg/h dried product 62, for instance may 300kg/h of residual product be mixed with about 215kg/h of dried product. The output from the mixer 30 is thereby 400-550kg/h mixed product 31, for instance about 515kg/h. The fluidized bed 40 may have a size of about 2m². The output of the fluidized bed 40 may be about 200-350kg/h dried product 42. In case of 515kg/h incoming mixed product, the output may be about 315kg/h of dried product. This dried product 42 is supplied to the finisher 60. The finisher 60 outputs the about 200-350kg/h dried product 61, including any potential separated particles 73 from the cyclone device 70. The portion 62 of the dried product 61 provided to the mixer 30 may be about 100-250kg/h, and the portion 63 supplied to the storage means 80 is about 100-250kg/h. In the case of 215kg/h being supplied back to the mixer 30 and the fluidized bed 40 outputs 315kg/h, the portion 63 supplied to the storage means 80 may be about 100kg/h.

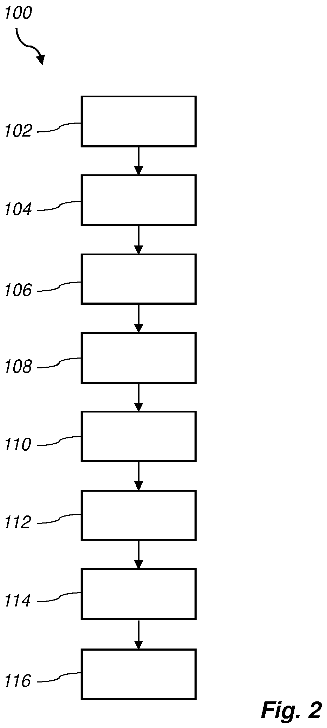

Fig. 2 illustrates a flow chart of a method 100 according to an embodiment of the invention. The method 100 comprises the steps of producing 102 a main foodstuff product in the foodstuff production process 2, further resulting in the residual product 12, receiving 104 the residual product 12 continuously from the foodstuff production process 2, supplying 106 the residual product 12 to a mixer 30, supplying 108 the mixed product 31 to a fluidized bed 40, supplying 110 heated air 57 of between 80-150 degrees C to the fluidized bed 40, drying 112 the mixed product 31 in the fluidized bed 40 using the supplied heated air 57, cooling 114 the dried product, and extracting 116 the dried product 42 from the fluidized bed 40, wherein a portion 62 of the dried product is supplied to the mixer to be mixed with the received residual product 12. The method 100 may further comprise methods steps performed by components of the system 1 as described above.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A method (100) of drying a residual product from a foodstuff production process (2), the residual product (12) containing between 20-50% dry substance, the method comprising the steps of:
producing (102) a main foodstuff product (4) in the foodstuff production process, resulting in the residual product (12);
receiving (104) the residual product (12) continuously from the foodstuff production process;
supplying (106) the residual product to a mixer (30);
supplying (107) the mixed product (31) to a fluidized bed (40);
supplying (110) heated air (57) of between 60-150 degrees C to the fluidized bed (40);
drying (112) the mixed product in the fluidized bed (40) using the supplied heated air (57);
cooling (114) the dried product;
extracting (116) the dried product (42) from the fluidized bed (40),
wherein a portion (62) of the dried product is supplied to the mixer (30) to be mixed with received residual product (12).

2. The method according to claim 1, wherein the mixer (30) is supplied with 55-80% residual product (12) and 20-45% dried product (62) having at least 80% dry substance, mixed together to the mixed product (31) in the mixer (40).

3. The method according to any of the preceding claims, wherein the mixer (30) is supplied with residual product (12) and dried product (62) in a ratio such that the mixed product (31) contains about 45-50% dry substance.

4. The method according to any of the preceding claims, wherein the dry substance level of the mixed product (31) is measured, and wherein the supply of dried product and/or residual product is controlled based on the measured dry substance level.

5. The method according to claim 4, wherein the dry substance level of the mixed product (31) is measured by measuring a current consumption level of a motor (32) driving mixing means in the mixer (30).

6. The method according to any of the preceding claims, wherein the step of drying (112) the mixed product comprises a step of shaking or vibrating the mixed product to be dried in the fluidized bed (40) while supplying the heated air (57).

7. The method according to claim 6, wherein the dried product is further shaken or vibrated in the fluidized bed during cooling (112).

8. The method according to any of the preceding claims, wherein the fluidized bed (40) comprises a first section (43) in which the heated air (57) is distributed to heat the mixed product to be dried in the fluidized bed, and a second section (44) in which cooling air (58) is supplied to cool the dried product.

9. The method according to any of the preceding claims, wherein the step of supplying (110) heated air comprises the steps of receiving air (51) and heating the received air with waste heat (56) from the foodstuff production process before supplying the heated air (57) to the fluidized bed (40).

10. The method according to any of the preceding claims, wherein the step of extracting (116) the dried product (42) from the fluidized bed (40) comprises a step of suppling the dried product to a finisher device in which the dried product is comminuted.

11. The method according to any of the preceding claims, further comprising a step of extracting air (71) used for drying the product from the fluidized bed (40), and supplying the extracted air to a cyclone device (70) to separate particles of dried product from the extracted air.

12. The method according to any of the preceding claims, wherein the foodstuff production process is beverage production process.

13. The method according to claim 12, wherein the beverage production process is oat drink, broad bean drink, or soy drink production process.

14. The method according to any of the preceding claims, further comprising a step of cleaning the mixer and the fluidized bed by means of at least one respective cleaning nozzle.

15. A foodstuff production process residual product drying system (1) comprising a mixer (30), a fluidized bed (40) and means (50) for supplying heated air (57) to the fluidized bed (40), wherein the system (1) is configured to perform the method (100) according to any of the preceding claims.
